# EUROPÄISCHE PATENTSCHRIFT

(11) **EP 1 209 026 B1**
(45) Veröffentlichungstag und Bekanntmachung des Hinweises auf die Patenterteilung: **02.01.2013**
(21) Anmeldenummer: 01126297.9
(22) Anmeldetag: 06.11.2001
(51) Int. Cl.: B60N 2/56, B60N 2/00, B60R 21/01, B60H 1/00

(54) **Flächenheizelement für Fahrzeugsitze**
Flat heating element for vehicles seats
Elément chauffant plat pour véhicules

(30) Priorität: 18.11.2000 DE 10057222
(43) Veröffentlichungstag der Anmeldung: 29.05.2002
(73) Patentinhaber: I.G. Bauerhin GmbH, 63584 Gründau (DE)
(72) Erfinder: Michelmann, Jochen, 63571 Gelnhausen (DE)
(74) Vertreter: Grimm, Ekkehard

(56) Entgegenhaltungen:
- WO-A-98/52786
- DE-A- 19 648 268
- DE-A- 19 826 391
- DE-C- 19 717 273
- PATENT ABSTRACTS OF JAPAN Bd. 2000, Nr. 14, 5. März 2001 (2001-03-05) & JP 2000 325186 A (NISSAN MOTOR CO LTD), 28. November 2000 (2000-11-28)

## Beschreibung

Die Erfindung betrifft ein Flächenheizelement, insbesondere zur Beheizung von Kfz-Sitzen, gemäß dem Oberbegriff des Anspruchs 1.

Im allgemeinen bestehen Flächenheizelemente, insbesondere zur Beheizung von Kfz-Sitzen, aus mindestens zwei Schichten eines textilen Materials, wobei mindestens ein zwischen den Schichten eingebrachter Heizleiter in der Regel mäanderförmig verläuft und die eingespeiste elektrische Energie als Wärme an den Sitz abgibt (siehe auch EP 0 057 241).

DE 198 52 239 A1 offenbart eine Vorrichtung zur Präsenzerkennung einer lebenden Person, insbesondere zur Erkennung der Belegungsart eines Fahrzeugsitzes, die eine zeit- und ortsauflösende Sensoreinrichtung mit einem Sensor aufweist, deren Ausgangssignal einer Auswerteeinheit der Vorrichtung zuführbar ist, durch die aus dem Sensorsignal eine Kraft- und/oder Druckverteilung des vom Sensor erfaßten Bereichs des Fahrzeugsitzes berechenbar ist sowie ein entsprechendes Verfahren.

DE 198 30 104 A1 stellt eine Vorrichtung zum Erfassen eines auf einen Fahrzeugsitz ausgeübten Druckes mit an mindestens einem Sitzelement angebrachten Sensoren und einer mit den Sensoren verbundenen und die von den Sensoren ausgehenden Signalen erfassenden Steuereinheit bereit. Mindestens ein Teil der Sensoren ist außerhalb des in unmittelbarem Kontakt zum Körper des Passagiers stehenden Sitzbereiches angeordnet.

In DE 198 26 391 A1 ist ein Sensor zur Anwesenheitserfassung von Personen, insbesondere für Fahrzeugsitze, offenbart, der zwei flächige, flexible Elektroden und ein zwischen den Elektroden angeordnetes Dielektrikum aufweist. Die Elektroden sind übereinanderliegend angeordnet und das Dielektrikum ist ebenfalls flächig und flexibel sowie elastisch komprimierbar ausgebildet.

Moderne Flächenheizelemente weisen darüberhinaus mehrere Sensorelemente auf, die aus mindestens zwei miteinander verklebten Kunststoffolien bestehen, auf denen mittels Siebdrucktechnik einzelne Leiterbahnen aus Kohleleitpaste und/oder Silberleitpaste aufgedruckt sind. An vorher festgelegten Punkten sind Drucksensoren integriert, welche die elektrischen Werte in Abhängigkeit des auf sie einwirkenden Druckes verändern. Diese Daten werden über die gedruckten Leiterbahnen zu einem Hauptanschluß übermittelt. Auf diese Weise ist eine Sitzbelegungsdetektion möglich.

In der Vergangenheit konnte es teilweise vorkommen, daß bei Kfz-Sitzen mit integrierter Sitzheizung die Sitzbelegungserkennung im eingeschalteten Zustand der Sitzheizung falsche Ergebnisse lieferte bzw. es einen Unterschied machte, ob eine Lordosenstütze des Sitzes in Richtung des Fahrers ausgefahren war oder nicht. Weiterhin kam es teilweise zu Störungen des Sitzheizungsbetriebes wegen einer gestörten Sitzbelegungserkennung bei Ablage von portablen Funktelephonen (Handys) auf dem Kfz-Sitz.
Schließlich kam es vereinzelt zu Störungen der Sitzbelegungserkennung bei produktionsbedingt nur leichten Änderungen des Sitzgestells oder des Sitzbezugs (beispielsweise wegen eines Wechsels des entsprechenden Zulieferers).

Die DE 196 48 268 A beschreibt einen Fahrzeugsitz mit einer Steuervorrichtung, die unter anderem auch eine Sitzbelegungserkennung und eine Positionserkennung umfasst. Einzelheiten darüber, wie die dazugehörigen Sensoren und die weiteren Bauteile in dem Fahrzeugsitz gehalten sind, sind nicht beschrieben.

Die WO 98 52786 A betrifft eine Matte mit einem heizbaren Draht für eine Kraftfahrzeugsitzheizung. Unter anderem ist in die Matte eine Antenne integriert, mit der ein auf dem Sitz abgestellter Kindersitz erkannt werden soll. Diese Matte mit der Sitzheizung und der Antenne ist zwischen dem Sitzpolster und dem Polsterüberzug des Sitzes angeordnet.

Die DE 197 17 273 C beschreibt eine Vorrichtung mit einem Foliendrucksensor zur Sitzbelegungserkennung sowie mit einer Sitzheizung. Dieser Foliendrucksensor besteht aus zwei laminierten Kunststoffträgerfolien.

Aus dem Vorgenannten ergibt sich die Aufgabe, mit Hilfe eines neuartigen Flächenheizelementes die obengenannten Nachteile zumindest teilweise zu beseitigen bzw. zu mindern.

Diese Aufgabe wird erfindungsgemäß jeweils durch ein Flächenheizelement nach Anspruch 1, eine Sitzheizung nach Anspruch 5 und einen Sitz nach Anspruch 6 gelöst.

Hintergrund der Erfindung ist die überraschende Erkenntnis, daß der Heizleiter als solcher in vielen Fällen der Hauptgrund für die oben genannten Störungen und Probleme ist.

Das Flächenheizelement weist mindestens zwei Schichten eines textilen Materials auf, wobei ein zwischen den Schichten eingebrachter Heizleiter derart angeordnet ist, daß ein ebenfalls zwischen den Schichten fixiertes und auf Kunststoffolie basierendes und mindestens einen darauf fixierten Drucksensor aufweisendes Sensorelement nahezu keinen relevanten im elektrischen Betrieb eines Kfz-Sitzes üblicherweise auftretenden thermischen und/oder elektrischen Heizleiter-Störeinflüssen und/oder nach Aufbringen eines Sitzbezuges auf das textile Material eines Sitzes auftretenden mechanischen Heizleiter-Störeinflüssen ausgesetzt ist, wobei das Sensorelement mit wenigstens einem Drucksensor beweglich in einer taschenförmigen Ausbildung am textilen Material eingefaßt ist, da der Drucksensor fast spannungsfrei in der taschenförmigen Ausbildung aufgenommen werden kann, was wiederum zu weniger mechanischen Einflüssen, insbesondere am Drucksensor selbst, über den Heizleiter führt. Die taschenförmige Ausbildung ist durch Verkleben von zwei benachbarten Schichten des textilen Materials gebildet, indem der Klebstoff um den entsprechenden Teil des Sensorelementes aufgetragen wird und die Schichten aufeinandergepreßt werden.

Auf der Kunststoffolie des Sensorelementes kann eine weitere leitfähige Schicht aufgebracht sein, um eine elektrische Abschirmung der Leiterbahnen des Sensorelementes gegenüber dem Heizleiter und gegenüber elektrischen Einflüssen von außen, wie beispielsweise mobilen Telephonen (Handys), bereitzustellen. Gleichzeitig dient diese Schicht auch als zusätzlicher thermischer Schutz. Es ist darüberhinaus möglich, noch weitere zusätzliche elektrische Schutzschichten aufzubringen, die geschlossen oder aber gitterförmig aufgebracht sein können. Die Schicht kann aus Kohle- oder Silberleitpaste bestehen.

Das textile Material kann beispielsweise aus einem Polyester oder einem Polyamid bestehen. Das Sensorelement besteht im wesentlichen aus mindestens zwei Kunststoffolien, beispielsweise einem Polyester, zwischen denen eine leitfähige Schicht, beispielsweise Kohleleitpaste oder Silberleitpaste, angeordnet ist und mindestens einem Drucksensor. Hierbei können aus dem Stand der Technik bekannte Drucksensoren eingesetzt werden, wie sie beispielsweise aus Folientastaturen bekannt sind.

Die maximale Temperatur des Heizleiters beträgt T = +80 bis +150 °C, während durch die spezielle Anordnung/Legung des Heizleiters die Temperatur des Drucksensors maximal T = +85 °C beträgt. Bei höheren Temperaturen käme es zu erheblichen Störungen des Betriebs bzw. zu einem ggf. Anschmelzen der Kunststoffolie des Sensorelementes. Üblicherweise beträgt der Abstand zwischen Sensorelement, insbesondere Drucksensor, und dem Heizleiter einige Millimeter.

Weiterhin kann durch die spezielle Anordnung/Legung des Heizleiters dafür Sorge getragen werden, daß eine Übertragung von elektrischen Störeinflüssen, insbesondere von mobilen Telephonen (Handys), über den Heizleiter auf das Sensorelement, insbesondere auf den Drucksensor, vermieden wird durch Herabsetzen von fremden Feldstärken und es so auch in Grenzfällen - erst ab ca. 30 kg wird in der Regel eine Sitzbelegung angezeigt - nicht zu durch insbesondere mobile Telephone induzierte Fehlsteuerungen hinsichtlich der Sitzplatzbelegung kommt.

Schließlich kann durch die spezielle Anordnung/Legung des Heizleiters dafür Sorge getragen werden, daß nach Aufbringen eines Sitzbezuges auf das textile Material eines Sitzes das Sensorelement, insbesondere der Drucksensor, nahezu keinen üblicherweise auftretenden mechanischen Heizleiter-Störeinflüssen ausgesetzt ist, die durch eine sonst aus dem Stand der Technik übliche sehr enge benachbarte Verlegung des Heizleiters zu einem Sensorelement, insbesondere zu einem Drucksensor, hervorgerufen werden.

Der Verlauf des Heizleiters wird durch Nachmessen der einzelnen oben angegebenen Größen (Temperatur, Feldstärke, mechanische Verformungen des Drucksensors) verifiziert, so daß die oben genannten Bedingungen und vorteilhaften Eigenschaften erfüllt werden.

Auf dem Sensorelement ist in vorteilhafter Weise mindestens ein Temperaturfühler angeordnet, da somit eine effiziente Temperaturüberwachung und Temperaturkompensation des Drucksensors (unterschiedliches Ansprechen des Drucksensors in Abhängigkeit der Temperatur wird berücksichtigt) möglich ist, wobei darüberhinaus auch Informationen über die eigentliche Sitztemperatur gewonnen werden können. Die Temperaturfühler können als unbedrahtete Bauelemente, insbesondere SMD-Bauteilen, direkt in die Leitpaste gesetzt werden und verkleben anschließend während des Trocknungsprozesses fest mit den gedruckten Leiterbahnen. Die Informationen der Temperatursensoren können einfach über diese gedruckten Leiterbahnen zu einem Hauptanschluß außerhalb der Sitzfläche geleitet werden. Als Temperatursensoren sind insbesondere Pt-100, Pt-1000, NTCs sowie Halbleiterbausteine denkbar.

In vorteilhafter Weise sind zumindest ein Teil von gedruckten Leiterbahnen auf der Kunststoffolie des Sensorelementes Zuleitungen für den Heizleiter, was zu Kosteneinsparungen am Flächenheizelement führt und Funktionen der Heizung auf die Kunststoffolie übertragen oder Zusatzinformationen mit Hilfe der Kunststoffolie zur Steuerung der Heizung gewonnen werden.

In vorteilhafter Weise weist das Flächenheizelement mindestens eine elektrisch von allen anderen Leiterbahnen getrennte Leiterschleife auf. Diese Schleife stellt ein einfaches Antennensystem dar, welches Daten senden und empfangen kann. Diese Daten können beispielsweise durch einen aufliegenden Kindersitz oder sonstige Sender erzeugt werden, um dem Heizungssystem oder einem weiteren Datensystem im Kraftfahrzeug Informationen über die Belegung des Sitzes zu übermitteln.

Eine Sitzheizung, enthaltend ein erfindungsgemäßes Flächenheizelement, und ein Sitz, insbesondere ein Kfz-Sitz, enthaltend ein erfindungsgemäßes Flächenheizelement, weisen die oben genannten vorteilhaften Eigenschaften auf.

Das nachfolgende Beispiel dient zur näheren Erläuterung der Erfindung.

In der nachfolgenden Zeichnung zeigt:

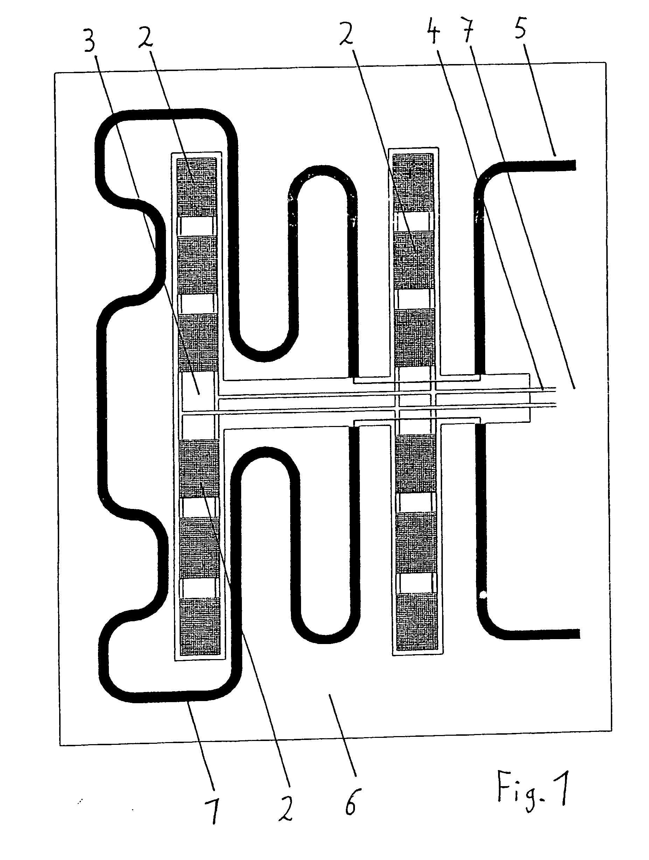

Figur 1 - eine skizzenhafte Aufsicht eines erfindungsgemäßen Flächenheizelementes.

Das Flächenheizelement besteht aus zwei Schichten 6 eines Polyestergewirkes, wovon die obere Schicht abgenommen und nicht abgebildet ist.
Auf der unteren Schicht 6 befindet sich zunächst ein rechtwinkelig verlaufender Heizleiter 1, der zwei Heizungsanschlüsse 5 aufweist. Weiterhin ist auf der Schicht 6 ein Sensorelement 3 aus einem Sandwich einer unteren und oberen Kunststoffolie und einer dazwischen angeordneten Silberleitpaste mit vier Drucksensoren 2 aufgebracht, wobei diese über Leiterbahnen 4 einen gemeinsamen Sensoranschluß 7 aufweisen. Ein Teil der Leiterbahnen 4 dient gleichzeitig als Heizleiter 1.

## Patentansprüche

1. Flächenheizelement, mit mindestens zwei Schichten (6) eines textilen Materials, wobei zwischen den Schichten (6) ein Heizleiter (1) sowie ein ebenfalls zwischen den Schichten (6) fixiertes und auf Kunststofffolie basierendes und mindestens einen darauf fixierten Drucksensor (2) aufweisendes Sensorelement (3) für eine Sitzbelegungserkennung angeordnet sind, wobei das Sensorelement derart angeordnet ist, dass es nahezu keinen relevanten im elektrischen Betrieb eines Kfz-Sitzes üblicherweise auftretenden thermischen und/oder elektrischen Heizleiter-Störeinflüssen und/oder nach Aufbringen eines Sitzbezuges auf das textile Material eines Sitzes auftretenden mechanischen Heizleiter-Störeinflüssen ausgesetzt ist, **dadurch gekennzeichnet, dass** das Sensorelement (3) mit wenigstens einem Drucksensor (2) beweglich in einer taschenförmigen Ausbildung am textilen Material eingefasst ist, wobei die taschenförmige Ausbildung durch Verkleben von zwei benachbarten Schichten (6) des textilen Materials gebildet ist, indem der Klebstoff um den entsprechenden Teil des Sensorelements (3) aufgetragen ist und die Schichten (6) aufeinander gepresst sind.

2. Flächenheizelement nach Anspruch 1, **dadurch gekennzeichnet, dass** auf dem Sensorelement (3) mindestens ein Temperaturfühler angeordnet ist.

3. Flächenheizelement nach Anspruch 1 oder 2, **dadurch gekennzeichnet, dass** zumindest ein Teil von gedruckten Leiterbahnen (4) auf der Kunststofffolie des Sensorelementes (3) Zuleitungen für den Heizleiter (1) sind.

4. Flächenheizelement nach Anspruch 3, **dadurch gekennzeichnet, dass** dieses mindestens eine Leiterschleife aufweist, die elektrisch von allen anderen Leiterbahnen (4) getrennt ist.

5. Sitzheizung enthaltend ein Flächenheizelement nach einem der Ansprüche 1 bis 4.

6. Sitz, insbesondere Kfz-Sitz, enthaltend ein Flächenheizelement nach einem der Ansprüche 1 bis 4.

## Claims

1. A flat heating element, comprising at least two layers (6) of a textile material, the layers (6) having arranged therein between a heating conductor (1) and a sensor element (3) which is also fixed between the layers (6) and based on plastic foil and comprises at least one pressure sensor (2) fixed thereto and is used for seat occupancy detection, the sensor element being arranged such that it is subjected to almost no relevant thermal and/or electrical disturbing influences of the heating conductor that normally occur during electrical operation of a car seat and/or mechanical disturbing influences of the heating conductor that occur after application of a seat cover to the textile material of a seat, **characterized in that** the sensor element (3) with at least one pressure sensor (2) is movably enclosed in a pouch-like configuration on the textile material, the pouch-like configuration being formed by gluing two neighboring layers (6) of the textile material **in that** the adhesive is applied around the corresponding part of the sensor element (3) and the layers (6) are pressed onto each other.

2. The flat heating element according to claim 1, **characterized in that** at least one temperature sensor is arranged on the sensor element (3).

3. The flat heating element according to claim 1 or 2, **characterized in that** at least some printed conductor paths (4) on the plastic foil of the sensor element (3) are feed lines for the heating conductor (1).

4. The flat heating element according to claim 3, **characterized in that** said flat heating element comprises at least one conductor loop which is electrically separated from all other conductor paths (4).

5. A seat heater containing a flat heating element according to any one of claims 1 to 4.

6. A seat, particularly a vehicle seat, containing a flat heating element according to any one of claims 1 to 4.

## Revendications

1. Elément chauffant mince de surface, comprenant au moins deux couches (6) en un matériau textile, élément dans lequel entre les deux couches (6) sont agencés un conducteur chauffant (1) ainsi qu'un élément de capteur (3), qui est également fixé entre les couches (6) et est réalisé sur la base d'un film de matière plastique sur lequel est fixé au moins un capteur de pression (2), et qui est destiné à détecter l'occupation d'un siège, l'élément de capteur étant agencé de manière à ne pratiquement pas être soumis à des influences parasites thermiques et/ou électriques notables du conducteur chauffant, qui apparaissent usuellement lors du fonctionnement électrique d'un siège de véhicule automobile, et/ou à des influences parasites mécaniques du conducteur chauffant, qui apparaissent après la mise en place d'un revêtement ou d'une housse de siège sur le matériau textile d'un siège, **caractérisé en ce que** l'élément de capteur (3), avec au moins un capteur de pression (2), est enserré dans une conformation en forme de poche sur le matériau textile, la conformation en forme de poche étant réalisée par collage mutuel de deux couches voisines (6) du matériau textile, grâce à l'application de la colle autour de la partie correspondante de l'élément de capteur (3) et au pressage l'une sur l'autre des couches (6).

2. Elément chauffant mince de surface selon la revendication 1, **caractérisé en ce que** sur l'élément de capteur (3) est agencée au moins une sonde de température.

3. Elément chauffant mince de surface selon la revendication 1 ou la revendication 2, **caractérisé en ce qu'**au moins une partie de pistes conductrices (4) imprimées sur le film de matière plastique de l'élément de capteur (3), sont des conducteurs d'alimentation pour le conducteur chauffant (1).

4. Elément chauffant mince de surface selon la revendication 3, **caractérisé en ce que** celui-ci présente au moins une boucle conductrice, qui est isolée électriquement de toutes les autres pistes conductrices (4).

5. Chauffage de siège comprenant un élément chauffant mince de surface selon l'une des revendications 1 à 4.

6. Siège, notamment siège de véhicule automobile, comprenant un élément chauffant mince de surface selon l'une des revendications 1 à 4.
